Europäisches Patentamt

European Patent Office

Office européen des brevets

(19)

(11) Numéro de publication : **0 044 765 B1**

(12) **FASCICULE DE BREVET EUROPÉEN**

(45) Date de publication du fascicule du brevet :
05.06.85

(51) Int. Cl.⁴ : **G 06 F 13/36**

(21) Numéro de dépôt : **81401075.7**

(22) Date de dépôt : **03.07.81**

(54) **Procédé d'arbitration de plusieurs sous-ensembles et dispositif d'arbitration pour sa mise en œuvre.**

(30) Priorité : 08.07.80 FR 8015156
31.07.80 FR 8016921

(43) Date de publication de la demande :
27.01.82 Bulletin 82/04

(45) Mention de la délivrance du brevet :
05.06.85 Bulletin 85/23

(84) Etats contractants désignés :
DE GB IT SE

(56) Documents cités :
EP-A- 0 011 701
EP-A- 0 032 862
EP-A- 0 032 864
EP-A- 0 039 635
FR-A- 2 191 769
US-A- 3 633 163
US-A- 4 096 569
IBM TECHNICAL DISCLOSURE BULLETIN, vol. 22, no. 12, 1er mai 1980 New York, US STRIETELMEIER: "Arbitration array for device connection to I/O channels", pages 5237-5238
COMPUTER DESIGN, avril 1978, CONCORD, US HOJBERG: "One-step programmable arbiters for multiprocessors", pages 154-156, 158

(73) Titulaire : **THOMSON-CSF TELEPHONE**
**146, Boulevard de Valmy**
**F-92707 Colombes (FR)**

(72) Inventeur : **Cartret, Roger**
**THOMSON-CSF SCPI 173 Bld. Haussmann**
**F-75360 Paris Cedex 08 (FR)**
Inventeur : **Volpe, Giovanni**
**THOMSON-CSF SCPI 173 Bld. Haussmann**
**F-75360 Paris Cedex 08 (FR)** ·

(74) Mandataire : **Weinmiller, Jürgen et al**
**Zeppelinstrasse 63**
**D-8000 München 80 (DE)**

## Description

La présente invention se rapporte à un procédé d'arbitration de plusieurs sous-ensembles ainsi qu'à un dispositif d'arbitration pour un système dans lequel il faut arbitrer entre plusieurs sous-ensembles.

On connaît d'après l'article des pages 154 à 158 du numéro d'avril 1978 de la revue « Computer Design » un procédé d'arbitration et un dispositif d'arbitration pour un système multiprocesseur comportant plusieurs unités de traitement identiques toutes reliées au même bus. Cet arbitreur connu, du type synchrone, permet d'établir une priorité tournante entre les différentes unités de traitement afin qu'aucune d'entre elles ne monopolise le bus, et afin que le traitement réalisé par le système multiprocesseur soit le plus rapide possible. L'arbitreur connu comporte essentiellement une mémoire morte dans laquelle sont programmées toutes les configurations possibles de demandes de réservation du bus et d'états correspondants.

Ce dispositif connu nécessite un grand nombre de fils de liaison entre le dispositif arbitreur et les différentes unités de traitement, ce qui peut être gênant lorsque le nombre d'unités de traitement est élevé.

De plus, la taille de la mémoire utilisée dans l'arbitreur connu est fonction du nombre d'unités de traitement coopérant avec elle. Si le nombre d'unités de traitement est peu élevé, la capacité de la mémoire morte nécessaire pour réaliser l'arbitreur est corrélativement faible, et l'arbitreur est donc peu onéreux et facile à réaliser. Par contre, si le nombre d'unités de traitement est élevé, il faut utiliser plusieurs mémoires de grande capacité, et la réalisation de l'arbitreur devient complexe et onéreuse.

On connaît également d'après l'article de Strietelmeier paru aux pages 5237 et 5238 de IBM Technical Disclosure Bulletin, vol. 22, n° 12, 1er mai 1980, un procédé d'arbitration et un dispositif pour sa mise en œuvre. Le procédé connu d'arbitration de plusieurs sous-ensembles faisant partie d'un système comprenant une voie de communication commune, chaque sous-ensemble pouvant réclamer la priorité pour l'accès à cette voie, ces sous-ensembles étant répartis en plusieurs groupes, ne prévoit qu'un seul cycle d'attribution de priorité. Bien que les sous-ensembles soient groupés en lignes et colonnes, la priorité est attribuée « en série » d'abord à tous les utilisateurs de la ligne la plus prioritaire, puis à ceux de la ligne suivante dans l'ordre des priorités, et ce jusqu'à la ligne la moins prioritaire. Le signal de priorité met un temps maximal non négligeable à parvenir à tous les utilisateurs.

Un procédé et un dispositif de l'attribution de priorité entre plusieurs sous-ensembles répartis en plusieurs groupes, dans lequel l'attribution de priorité est centralisée, fait l'objet de la demande EP-A-0 039 635 (publiée 11.11.81).

La présente invention a pour objet un procédé d'arbitation de plusieurs sous-ensembles faisant partie d'un système comprenant une voie de communication commune, chaque sous-ensemble pouvant réclamer la priorité pour l'accès à cette voie, ce procédé permettant une détermination simple et rapide des priorités, même pour un nombre élevé d'unités de traitement, et permettant d'accélérer cette détermination lorsqu'une seule unité réclame la priorité.

La présente invention a également pour objet un dispositif d'arbitration ne présentant pas les inconvénients du dispositif connu, qui soit facile à réaliser et peu onéreux.

Le procédé d'arbitration conforme à la présente invention est mis en œuvre dans plusieurs sous-ensembles comportant chacun un moyen d'arbitration, faisant partie d'un système comprenant une voie de communication commune, chaque sous-ensemble pouvant réclamer la priorité pour l'accès à cette voie afin d'effectuer une opération élémentaire, ces sous-ensembles étant répartis en plusieurs groupes, et selon ce procédé on réserve à chacun de ces groupes une seule ou plusieurs priorités dans une suite cyclique principale d'attribution de priorité, on réserve à chacun des sous-ensembles, à l'intérieur de chaque groupe, une seule ou plusieurs priorités dans une suite cyclique secondaire, le moyen d'arbitration de chaque sous-ensemble recevant d'une part un signal unique provenant de chaque groupe et indiquant si l'un au moins des sous-ensembles du groupe en question réclame la priorité, et d'autre part un autre signal provenant de chacun des sous-ensembles de son propre groupe et indiquant si le sous-ensemble en question réclame la priorité, et le moyen d'arbitration de chaque unité ayant réclamé la priorité détermine après chaque opération élémentaire effectuée par un sous-ensemble si la priorité revient à son propre groupe selon la suite principale et si la priorité revient à sa propre unité dans son propre groupe selon la suite secondaire, et lorsque ces deux conditions sont réunies, le moyen d'arbitration de l'unité en question lui accorde la priorité.

Selon un aspect préféré du procédé de la présente invention, on réserve, pour la suite cyclique principale, une seule priorité à chacun des groupes et ce selon un ordre déterminé fixé à l'avance, et on réserve, pour les suites cycliques secondaires, dans chaque groupe, une seule priorité à chacun des sous-ensembles, et ce selon un autre ordre déterminé, fixé à l'avance.

Selon un autre aspect du procédé de l'invention, on répartit, dans chaque groupe ou dans certains d'entre eux, les sous-ensembles en plusieurs sous-groupes, on réserve à chacun des groupes une seule ou plusieurs priorités dans une suite cyclique principale d'attribution de priorité, on réserve à chacun des sous-groupes une seule ou plusieurs priorités dans une suite cyclique secondaire, et on réserve à chacun des sous-ensembles à l'intérieur de chaque sous-groupe une seule ou plusieurs priorités dans une suite cyclique tertiaire.

Le dispositif d'arbitration conforme à la présente invention destiné à la mise en œuvre du procédé de l'invention et dans un système comportant plusieurs groupes de plusieurs sous-ensembles, chaque sous-ensemble pouvant réclamer la priorité pour l'accès à une voie de communication commune, ce dispositif comprenant dans chaque sous-ensemble un moyen d'arbitration, et selon l'invention chaque moyen d'arbitration comporte une sortie de demande de priorité individuelle, une sortie de demande de priorité de groupe, plusieurs entrées de signalisation de demandes de groupes, et plusieurs entrées de signalisation de demandes individuelles, et, dans chaque groupe, les sorties de demande de priorité de groupe sont reliées à une liaison commune, et, pour chaque moyen d'arbitration, chaque entrée de signalisation de demandes de groupes est reliée à la liaison commune correspondante, et chaque entrée de signalisation de demandes individuelles est reliée à la sortie individuelle de demande de priorité d'un sous-ensemble correspondant de son propre groupe, et chaque moyen d'arbitration comporte un premier arbitreur élémentaire connu en soi dont les entrées sont reliées aux entrées correspondantes de signalisation de demandes individuelles dudit moyen d'arbitration, et dont la sortie, correspondant au rang dudit moyen d'arbitration, est reliée à une première entrée d'un premier circuit ET à deux entrées, ledit premier arbitreur élémentaire comportant une mémoire mémorisant une suite cyclique principale d'attribution de priorité de groupe, et un second arbitreur élémentaire dont les entrées sont reliées aux entrées correspondantes de signalisation de demandes de priorité du groupe dudit moyen d'arbitration et dont la sortie, correspondant au rang du groupe dans lequel est situé ledit moyen d'arbitration est reliée à la deuxième entrée dudit premier circuit ET ledit, un second arbitreur élémentaire comportant une mémoire mémorisant une suite cyclique secondaire d'attribution de priorité individuelle du groupe considéré, et la sortie du circuit ET est reliée par l'intermédiaire d'une bascule bistable type D à l'entrée d'autorisation d'utilisation de voie de communication commune du sous-ensemble considéré, et chaque moyen d'arbitration comporte un premier circuit OU dont le nombre d'entrées correspond au nombre d'unités d'arbitration du groupe considéré, chacune des entrées de ce circuit OU étant reliée à une entrée de signalisation de demandes individuelles de priorité dudit moyen d'arbitration et la sortie de ce circuit OU étant reliée à la sortie de demande de priorité de groupe dudit moyen d'arbitration.

Selon un mode de réalisation particulier de l'invention, le dispositif d'arbitration comprend un circuit d'accélération comportant : un second circuit ET dont le nombre d'entrées est égal à la somme du nombre de sous-ensembles dans le groupe considéré et du nombre de groupes moins un, une première entrée de ce circuit ET étant directement reliée à la sortie de demande de priorité individuelle du sous-ensemble considéré, les autres entrées de ce second circuit ET étant à chaque fois reliées par l'intermédiaire d'un inverseur logique d'une part aux sorties de demande de priorité individuelle de tous les autres sous-ensembles du même groupe que celui du sous-ensemble considéré, et d'autre part aux liaisons communes de demandes de priorité de groupe de tous les groupes autres que celui considéré ; ce circuit d'accélération comportant également un second circuit OU à deux entrées dont une entrée est reliée à la sortie dudit premier circuit ET à deux entrées et dont l'autre entrée est reliée à la sortie dudit second circuit ET, la sortie de ce second circuit OU étant reliée par l'intermédiaire d'une bascule bistable de type D à l'entrée d'autorisation d'utilisation de voie de communication commune du sous-ensemble considéré.

Selon un autre mode de réalisation de l'invention, pour banaliser les cartes à circuit imprimé comportant chacune un sous-ensemble avec son moyen d'arbitration, ainsi qu'une première partie de connecteur solidaire de ces cartes et coopérant par enfichage avec une seconde partie de connecteur solidaire du châssis recevant toutes les cartes du système, on relie à la première partie du connecteur de chaque carte, et de la même façon pour toutes les cartes : la sortie de demande de priorité individuelle ; la sortie dudit premier circuit OU ; toutes les sorties du premier arbitreur élémentaire ; toutes les sorties du second arbitreur élémentaire ; les deux entrées dudit premier circuit ET et chaque fois par l'intermédiaire d'un inverseur logique toutes les entrées, sauf la première, dudit second circuit ET ; et on relie par câblage, dans la deuxième partie de connecteur : la sortie de demande de priorité individuelle à l'entrée de signalisation de demande individuelle correspondante ; la sortie de demande de priorité de groupe à l'entrée correspondante de signalisation de demande de priorité de groupe ; la première entrée du premier circuit ET à la sortie correspondante du premier arbitreur élémentaire ; la seconde entrée du premier circuit ET à la sortie correspondante du second arbitreur élémentaire ; et on relie par câblage les bornes de la deuxième partie de connecteur d'une part à toutes les entrées de signalisation de demande individuelle de priorité dudit moyen d'arbitration sauf à celle correspondant au sous-ensemble considéré, et d'autre part à toutes les entrées de signalisation de demande de priorité de groupe dudit moyen d'arbitration sauf à celle correspondant au sous-ensemble considéré.

La présente invention sera mieux comprise à la lecture de la description détaillée d'un mode de réalisation pris comme exemple non limitatif et illustré par le dessin annexé, sur lequel :

la figure 1 est un schéma synoptique d'un système multiprocesseur comportant un dispositif d'arbitration conforme à la présente invention, et

la figure 2 est un schéma d'une unité d'arbitration du dispositif d'arbitration de la figure 1.

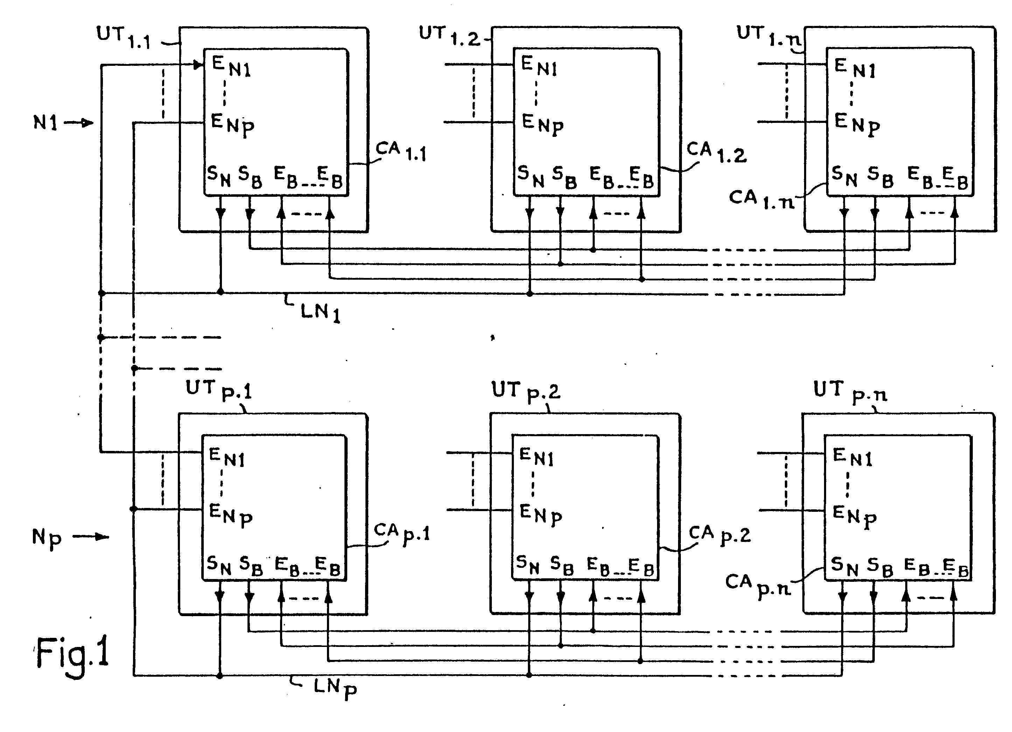

Le système multiprocesseur représenté partiellement sur la figure 1 comporte p.n unités de traitement identiques réparties en p groupes, ou niveaux, chaque niveau comportant n unités de traitement. De préférence, si le nombre (p.n) est un carré parfait, on choisit p = n, et dans le cas contraire, on choisit p le plus voisin possible de n, p pouvant être supérieur ou inférieur à n. Dans le cas représenté sur la figure 1, les unités de traitement sont référencées $UT_{1.1}$ à $UT_{1.n}$ pour le premier niveau, $UT_{2.1}$ à $UT_{2.n}$ pour le deuxième niveau, et ainsi de suite jusqu'au niveau de rang p pour lequel les unités de traitement sont référencées $UT_{p.1}$ à $UT_{p.n}$, les niveaux de rang 1 à p étant respectivement référencés N1 à Np. Chacune des unités de traitement $UT_{1.1}$ à $UT_{p.n}$ comporte un circuit individuel d'arbitration, respectivement référencé $CA_{1.1}$ à $CA_{p.n}$. Toutes les unités de traitement $UT_{1.1}$ à $UT_{p.n}$ sont reliées à un bus commun (non représenté).

Chacun des circuits individuels d'arbitration $CA_{1.1}$ à $CA_{p.n}$ comporte : une sortie $S_B$ de demande de bus ou demande d'attribution de priorité individuelle, une sortie $S_N$ de demande d'attribution de priorité du niveau dont elle fait partie, plusieurs entrées $E_B$ de prise en compte de demande d'attribution de priorité individuelle et plusieurs entrées $E_n$ de prise en compte de demande d'attribution de priorité de niveau.

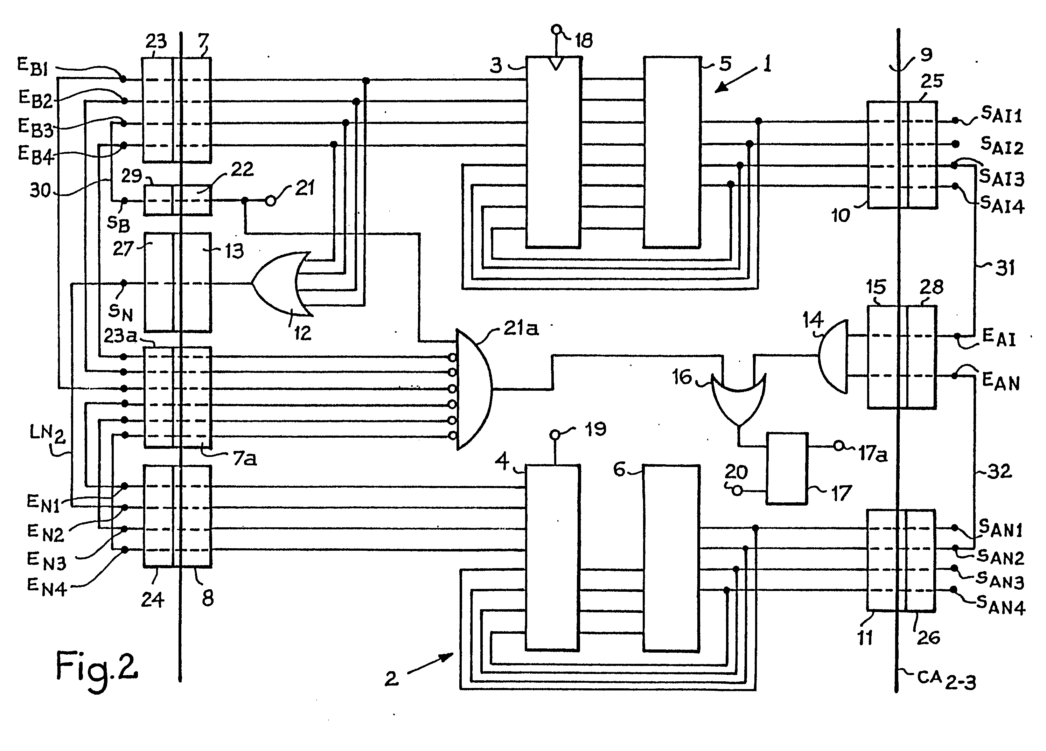

Chaque entrée $E_B$ d'un circuit individuel d'arbitration est reliée à une sortie $S_B$ correspondante de tous les autres circuits individuels d'arbitration du même niveau. Par conséquent, dans le cas présent, chaque circuit individuel d'arbitration comporte (n-1) entrées $E_B$ et sa sortie $S_B$ est reliée à une entrée $E_B$ de tous les autres circuits individuels du même niveau. En outre, comme on l'expliquera ci-dessous en référence à la figure 2, la sortie de demande de bus de chaque circuit individuel d'arbitration doit être reliée à sa propre entrée de prise en compte de demande de bus. Cette liaison peut se faire de façon interne dans chacun des circuits individuels, comme c'est le cas pour la figure 1 dans laquelle cette liaison n'a pas été représentée. Dans un but d'interchangeabilité des cartes de circuits individuels, comme expliqué ci-dessous en référence à la figure 2, cette liaison peut également se faire au niveau des connecteurs des cartes, et dans ce cas chaque circuit individuel comporte n entrées $E_B$ dont l'une est reliée extérieurement à sa propre sortie $S_B$.

Toutes les sorties $S_N$ des circuits individuels d'arbitration d'un même niveau sont reliées par l'intermédiaire d'un circuit OU, par exemple un OU câblé (non représenté), à une liaison de niveau commune référencée LN1 à LNp pour les niveaux N1 à Np respectivement. Chacune des entrées EN de chacun des circuits individuels est reliée à une liaison de niveau différente. Chaque circuit individuel d'arbitration comporte donc dans le cas présent p entrées $E_n$.

On va maintenant décrire en référence à la figure 2 un mode de réalisation préféré d'un circuit individuel d'arbitration, à savoir le circuit $CA_{l.m}$, c'est-à-dire le circuit de rang m dans le niveau de rang l. Dans l'exemple représenté sur la figure 2, l = 2 et m = 3, et le circuit représenté est le circuit $CA_{2.3}$. Par hypothèse (p.n) = 16, et on choisit de préférence p = n = 4. Toutefois, il est bien entendu que l'invention s'applique à un système multiprocesseur ayant un nombre (p.n) d'unités de traitement quelconque. Ce nombre peut même être premier, les niveaux N1 à Np ayant alors des nombres différents d'unités de traitement.

Le circuit $CA_{2.3}$ comporte essentiellement deux arbitreurs élémentaires 1, 2 respectivement, de type connu en soi d'après l'article précité de « Computer Design ». Ces arbitreurs élémentaires comportent chacun un registre à huit bascules bistables de type D, référencé 3, 4 respectivement, dont les huit sorties sont reliées aux huit entrées d'adressage d'une mémoire morte à quatre sorties référencée 5, 6 respectivement. Les quatre premières entrées des registres 3 et 4 sont reliées à des connecteurs, référencés 7 et 8 respectivement, solidaires de la carte 9 de circuit imprimé supportant les composants du circuit d'arbitrage $CA_{2.3}$ et le cas échéant l'unité de traitement correspondante (non représentée) ; qui serait référencée $UT_{2.3}$. Les quatre sorties des mémoires mortes 5 et 6 sont reliées, d'une part à des connecteurs respectivement référencés 10 et 11, et d'autre part aux quatre entrées des registres 3 et 4 respectivement.

Les quatre premières entrées du registre 3 sont également reliées aux quatre entrées d'un circuit 12 à fonction OU dont la sortie est reliée à un connecteur 13 solidaire de la carte 9.

Le circuit $CA_{2.3}$ comporte également une porte 14 à fonction ET et à deux entrées. Les deux entrées de la porte ET 14 sont reliées à un connecteur 15, et sa sortie est reliée à une première entrée d'une porte 16 à fonction OU dont la sortie est reliée à une bascule bistable 17 de type D. La sortie de la bascule 17 est reliée à une borne 17a, elle-même reliée, de façon non représentée, à l'entrée d'autorisation de bus de l'unité de traitement $UT_{2.3}$.

Les entrées de signaux d'horloge des bascules 3 et 4 sont reliées à des bornes 18 et 19 respectivement, elles-mêmes reliées ensemble, de façon non représentée, et à une sortie d'un générateur de signaux d'horloge approprié (non représenté). L'entrée de signaux d'horloge de la bascule 17 est reliée à une borne 20, elle-même reliée à ladite sortie du générateur de signaux d'horloge. Les bornes telles que les bornes 18, 19 et 20 de tous les circuits individuels d'arbitration sont reliées ensemble à la même dite sortie du générateur de signaux d'horloge.

La sortie (non représentée) de demande de bus de l'unité de traitement $UT_{2.3}$ est reliée à une borne 21 disposée sur la carte 9 et reliée à un connecteur 22 solidaire de cette même carte 9 (dans le cas où les composants de l'unité de traitement $UT_{2.3}$ sont montés sur la carte 9. Dans le cas contraire, on supprime la borne 21 et le connecteur 22). Ladite sortie de demande de bus de l'unité $UT_{23}$ est également reliée à une première entrée d'une porte ET 21a à sept entrées dont la sortie est reliée à la seconde entrée de la porte OU 16. On montre également sur la carte 9 un connecteur 7a à six bornes qui sont reliées chacune à une entrée correspondante de la porte ET 21a par l'intermédiaire d'un inverseur logique, ces six inverseurs logiques pouvant être intégrés à la porte 21a.

Bien entendu, pour des raisons de simplicité de réalisation, les connecteurs 7a, 7, 8, 10, 11, 13, 15 et 22 peuvent être réunis en un seul connecteur multiple.

Les huit connecteurs 7a, 7, 8, 10, 11, 13, 15 et 22, solidaires de la carte 9, coopèrent avec des connecteurs complémentaires correspondants fixés sur le bâti ou châssis (non représenté) supportant les autres éléments du système multiprocesseur dont fait partie le circuit $CA_{23}$. Ces connecteurs complémentaires correspondants sont respectivement référencés 23a et 23 à 29, et peuvent également être réunis en un seul connecteur multiple.

Pour la commodité de la description et des explications, on suppose que les quatre premières entrées des registres 3 et 4 et que les quatre sorties des mémoires 5 et 6 correspondent, dans l'ordre dessiné, de haut en bas, au rang des circuits d'arbitration à l'intérieur des niveaux, ou au rang des niveaux, selon le cas. Ainsi, les quatre broches du connecteur 23, qui sont reliées, du côté de la carte 9, par l'intermédiaire du connecteur 7, aux quatre premières entrées du registre 3, sont reliées extérieurement à la carte 9, aux sorties $S_B$ des quatre circuits $CA_{21}$ à $CA_{24}$ respectivement. Seule la liaison 30 à la sortie $S_B$ du circuit $CA_{23}$ a été représentée : cette sortie $S_B$ est en fait la broche de raccordement extérieur du connecteur 29. Du fait que seul le circuit $CA_{23}$ a été représenté, on n'a pas représenté les liaisons de la sortie $S_B$ du circuit $CA_{23}$ aux entrées $E_{B3}$ des autres circuits $CA_{21}$, $CA_{22}$ et $CA_{24}$, ni les liaisons des sorties $S_B$ de ces autres circuits aux bornes $E_{B1}$ et $E_{B4}$ respectivement.

Le circuit $CA_{23}$ se trouvant dans le niveau 2, sa sortie $S_N$, qui est en fait la broche de raccordement extérieur du connecteur 27, est reliée par la liaison $LN_2$ à son entrée $E_{N2}$. L'entrée $E_{N2}$ est en fait la seconde broche de raccordement extérieur du connecteur 24, et cette broche est reliée, par l'intermédiaire du connecteur 8, à la seconde entrée du registre 4. Les autres liaisons de $S_N$ et de $E_{N1}$, $E_{N4}$ aux entrées et sorties correspondantes de tous les autres circuits d'arbitration n'ont pas non plus été représentées.

Les trois premières broches de raccordement extérieur du connecteur 23a sont respectivement reliées aux bornes $E_{B1}$, $E_{B2}$ et $E_{B4}$. Les trois autres broches de raccordement extérieur du connecteur 23a sont respectivement reliées aux bornes $E_{N1}$, $E_{N3}$ et $E_{N4}$.

Les quatre sorties de la mémoire 5 ou mémoire d'autorisation individuelle sont reliées par l'intermédiaire du connecteur 10 aux quatre broches de raccordement extérieur du connecteur 25, qui constituent quatre bornes de sortie d'autorisation individuelle, respectivement référencées $S_{AI1}$ à $S_{AI4}$. Les quatre sorties de la mémoire 6 ou mémoire d'autorisation de niveau sont reliées, par l'intermédiaire du connecteur 11 aux quatre broches de raccordement extérieur du connecteur 26, qui constituent quatre bornes de sortie d'autorisation de niveau, respectivement référencées $S_{AN1}$ à $S_{AN4}$. Les deux broches de raccordement extérieur du connecteur 28, qui constituent les bornes d'entrée d'autorisation individuelle et d'autorisation de niveau, sont respectivement référencées $E_{AI}$ et $E_{AN}$. Etant donné que le circuit représenté sur la figure 2 est le troisième circuit du deuxième niveau, on relie par le fil de connexion 31 la broche $S_{AI3}$ du connecteur 25 à la broche $E_{AI}$ du connecteur 28, et on relie par un fil de connexion 32 la broche $S_{AN2}$ du connecteur 26 à la broche $E_{AN}$ du connecteur 28.

Nous allons maintenant expliquer le fonctionnement du dispositif décrit ci-dessus, en référence au cas où p = n = 4. Dans ce dispositif, les mémoires 5 et 6 des arbitreurs élémentaires 1 et 2 de chacun des circuits individuels d'arbitration sont programmées de façon analogue à celle indiquée dans le susdit article de la revue « Computer Design ». Toutefois à la différence du procédé connu, et comme expliqué plus en détail ci-dessous l'attribution des priorités est effectuée conformément au procédé selon la revendication 1. Il faut noter que la détermination des états présent et futur de chacun des sous-ensembles de chacun des groupes ou niveaux, peut se faire de plusieurs façons. Dans le cas le plus simple, on n'envisage que deux états, à savoir : maître du bus ou non. On peut aussi envisager, comme c'est le cas pour le mode de réalisation représenté sur la figure 2, quatre états différents, à savoir : au repos, maître du bus, en réserve (c'est-à-dire devant être maître du bus au cours du cycle principal ou secondaire subséquent) et en attente (c'est-à-dire devant être maître du bus). Il est également possible de prévoir soit trois états (en supprimant l'état « en attente ») ou cinq états ou plus (en ordonnant le ou les états « en attente »).

Pour le raisonnement qui suit, on va tout d'abord ignorer le rôle de la porte 21a, comme si sa sortie n'était pas reliée à la deuxième entrée du circuit OU 16.

Dès qu'une demande d'attribution de bus est émise par une unité de traitement, par exemple l'unité de traitement $UT_{23}$, sous forme d'un « 1 » logique, ce signal apparaît sur la sortie $S_B$ de cette unité de traitement. La sortie $S_B$ du circuit $CA_{23}$ de l'unité $UT_{23}$ étant reliée aux entrées $E_{B3}$ de tous les circuits d'arbitration des unités de traitement du niveau 2, chacun de ces circuits sait, grâce à l'adressage correspondant de sa mémoire 5, que le circuit $CA_{23}$ a demandé l'attribution du bus, et ce dès qu'un front actif du signal d'horloge est appliqué sur les bornes 18 et 19. En plus, un « 1 » apparaît à la sortie de OU du circuit $CA_{23}$, et est transmis aux entrées $E_{N2}$ de tous les circuits individuels d'arbitration. Dès que ledit front actif du signal d'horloge est appliqué sur les bornes 18 et 19, chacun des circuits individuels d'arbitration, et en particulier ceux des niveaux N1, N3 et N4, sait, grâce à l'adressage correspondant de sa mémoire 6, qu'une demande d'attribution du bus émane de l'un au moins des circuits du niveau N2. Par conséquent, si aucune autre demande n'est émise par les circuits individuels d'arbitration des niveaux N1, N3 et N4, la mémoire 6 du circuit $CA_{2.3}$ produit un « 1 » sur la sortie $S_{AN2}$. En outre, si dans le niveau N2 aucune autre unité de traitement n'émet de demande, la mémoire 5 du circuit $CA_{2.3}$ produit un « 1 » sur la sortie $S_{AI3}$. La porte ET 14 reçoit donc un « 1 » sur chacune de ses deux entrées, et, produit un « 1 » sur sa sortie. Dès qu'un second front actif du signal d'horloge est appliqué sur la borne 20 de la bascule 17, un « 1 » apparaît sur la borne 17a, et l'unité de traitement $UT_{2.3}$ est autorisée à utiliser le bus auquel elle est raccordée.

On va maintenant examiner ce qui se passe dans le même cas (seule l'unité de traitement $UT_{2.3}$ demande la priorité) en tenant compte de la porte 21a. Dès que l'unité de traitement $UT_{2.3}$ demande la priorité, c'est-à-dire dès qu'un « 1 » apparaît sur la borne 21, la porte 21a a un « 1 » sur sa première entrée, et également des « 1 » sur ses six autres entrées. En effet, puisqu'aucune autre unité de traitement ne demande l'utilisation du bus, des « 0 » sont présents sur les bornes $E_{B1}$, $E_{B2}$, $E_{B4}$ et $E_{N1}$, $E_{N3}$, $E_{N4}$, donc des « 1 » sont présents aux sorties des inverseurs reliés aux six autres entrées de la porte 21a. Par conséquent, un « 1 » apparaît à la sortie de la porte 21a et donc à la sortie de la porte 16. Dès qu'un premier front actif du signal d'horloge est produit, la bascule 17, en particulier, est activée, et un « 1 » apparaît sur sa borne de sortie 17a et l'unité de traitement $UT_{2.3}$ est aussitôt autorisée à utiliser le bus. En plus de ceci, ledit premier front actif du signal d'horloge active les registres 3 et 4, et les mémoires 5 et 6 sont donc adressées comme expliqué ci-dessus et produisent un « 1 » sur les sorties $S_{AI3}$ et $S_{AN3}$, donc un « 1 » à la sortie de 14 et de 16. Le second front actif du signal d'horloge active en particulier la bascule 17 et un « 1 » apparaît sur sa sortie 17a, ce « 1 » confirmant le « 1 » dû au premier front actif du signal d'horloge et apparu précédemment sur la borne 17a.

Bien entendu, si une autre unité de traitement réclame l'utilisation du bus entre le premier et le second fronts actifs du signal d'horloge, le second front actif modifie l'adressage des mémoires des circuits individuels d'arbitration correspondants, et un « 0 » apparaît sur la sortie $S_{AI3}$. Ainsi, l'unité $UT_{2.3}$ aura effectué une opération élémentaire entre le premier et le second fronts actifs du signal d'horloge grâce au « 1 » produit par la porte 21a, et une autre opération élémentaire entre le second et le troisième fronts actifs de ce signal d'horloge grâce au « 1 » produit par la mémoire 5 lors de son adressage par le premier front actif, puis entre le troisième et le quatrième fronts actifs ladite autre unité de traitement effectue une opération élémentaire. On voit donc que le circuit comprenant la porte ET 21a est un circuit d'accélération d'attribution de priorité permettant d'avancer d'une période du signal d'horloge le début du traitement effectué par l'unité de traitement en question, sans attendre le second front actif de ce signal d'horloge.

Dans tous les autres cas, c'est-à-dire lorsque plusieurs unités de traitement réclament simultanément l'utilisation du bus, un « 0 » est présent à la sortie de la porte ET 21a, et elle est donc inactive. Par conséquent, dans la suite des explications, traitant de ces autres cas, on ne tiendra pas compte de la porte 21a.

Si, dans le niveau N2 seulement, deux ou plusieurs unités de traitement demandent simultanément l'utilisation du bus, seule la mémoire d'autorisation individuelle de l'unité de traitement la plus prioritaire à cet instant émet un « 1 » sur la sortie d'autorisation individuelle correspondante. D'autre part, toutes les mémoires d'autorisation de niveau des circuits d'arbitration du niveau N2 produisent un « 1 » sur la sortie $S_{AN2}$ de chacun de ces circuits. Par conséquent, seule la porte ET du circuit individuel d'arbitration de l'unité de traitement la plus prioritaire reçoit un « 1 » sur chacune de ses deux entrées, et seule cette unité de traitement reçoit l'autorisation d'utiliser le bus. Dès que cette unité de traitement a effectué une opération élémentaire (lecture ou inscription d'un mot par exemple), la priorité passe à l'unité de traitement suivante dans l'ordre de priorité et ayant émis une demande. Ce processus se poursuit pour toutes les unités du niveau N2 ayant émis une demande, et chacune de ces unités effectue une opération élémentaire. Si à la fin de ce premier cycle d'attribution de priorité, une ou plusieurs unités de traitement on encore d'autres opérations élémentaires à effectuer, d'autres cycles d'attribution de priorité ont lieu, jusqu'à épuisement des demandes.

Si, à un instant donné, au cours d'un cycle d'attribution de priorité aux unités de traitement du niveau N2, des unités de traitement faisant partie d'autres niveaux émettent des demandes d'attribution du bus, la priorité est retirée au niveau 2 aussitôt après achèvement de l'opération élémentaire effectuée audit instant donné. En effet, un « 1 » apparaît sur chacune des liaisons de niveau communes $LN_1$, $LN_3$ ou $LN_4$ correspondant aux niveaux dans lesquels se sont produites ces demandes, et ces « 1 » se retrouvent sur les entrées correspondantes $E_{N1}$, $E_{N3}$ ou $E_{N4}$ de tous les circuits individuels d'arbitration, et en particulier de ceux du niveau N2. Les mémoires d'autorisation de niveau des circuits individuels du niveau N2 reçoivent donc une nouvelle configuration d'adressage dès l'application, juste après ledit instant donné, d'un front actif du signal d'horloge sur les bornes telles que 19. Cette nouvelle configuration produit en particulier un « 0 » sur les sorties $S_{AN2}$ de tous les circuits individuels du niveau N2, ce qui retire la priorité au niveau N2. Par ailleurs, les mémoires d'autorisation de niveau des circuits individuels du niveau ayant émis au moins une demande et étant le plus prioritaire après le niveau N2, par exemple le niveau N3, produisent alors un « 1 » sur les sorties $S_{AN3}$ correspondantes. Dans ce niveau N3, l'unité de traitement le plus prioritaire reçoit l'autorisation d'utiliser le bus pour une seule opération élémentaire. La priorité passe aussitôt après au niveau suivant dans l'ordre des priorités et ayant émis une demande, et l'unité de traitement la plus prioritaire de ce niveau reçoit également l'autorisation d'utiliser le bus pour une seule opération élémentaire. Dès que tous les niveaux ayant émis des demandes ont reçu la priorité pour que leur unité de traitement la plus prioritaire puisse effectuer une opération élémentaire, c'est-à-dire à la fin d'un premier cycle principal, la priorité revient au niveau N2, et un second cycle principal commence. Au cours de ce second cycle principal, la priorité est attribuée une seule fois à chacun des niveaux où il subsiste au moins une demande, et dans chacun des niveaux, la priorité est attribuée à l'unité de traitement suivant, dans l'ordre des priorités à l'intérieur du niveau considéré, celle venant d'avoir la priorité au cours du premier cycle principal. Après l'achèvement du second cycle principal, d'autres cycles principaux ont lieu tant qu'il subsiste des demandes, ces cycles principaux pouvant être différents, s'il ne subsiste plus de demandes dans l'un ou plusieurs des niveaux après achèvement d'un cycle principal, et/ou s'il apparaît des demandes dans un niveau où il n'y en avait pas précédemment. Pour chacun des niveaux où se présentent plusieurs demandes, la priorité est attribuée selon un cycle secondaire. Si n unités de traitement d'un même niveau donné demandent l'utilisation du bus, il faut n cycles principaux pour accomplir un seul cycle secondaire de ce niveau donné. A la lecture des explications ci-dessus, et connaissant l'article de « Computer Design » l'homme de l'art peut programmer très facilement les mémoires telles que les mémoires 5 et 6.

Dans le cas du mode de réalisation préféré de la figure 2, tous les circuits individuels d'arbitration $CA_{1.1}$ à $CA_{p.n}$ sont identiques au circuit $CA_{2.3}$ et toutes leurs mémoires sont programmées exactement comme les mémoires 5 et 6 respectivement. Seules les connexions $LN_2$, 30, 31 et 32, et celles du connecteur 23a, extérieures aux cartes de circuit imprimé comportant les composants des circuits individuels, sont réalisées de façon spécifique à chaque unité de traitement. Par conséquent, les cartes de circuit imprimé comportant les circuits individuels d'arbitration et, le cas échéant, les unités de traitement correspondantes, sont toutes interchangeables, ce qui facilite la maintenance du système multiprocesseur conforme à l'invention.

La répartition des unités de traitement en plusieurs niveaux ou même sous-niveaux permet d'avoir des circuits individuels d'arbitration relativement simples et faciles à réaliser, même lorsque le nombre d'unités de traitement du système multiprocesseur est très élevé. Les mémoires mortes telles que les mémoires 5 et 6 sont très faciles à programmer du fait de leur relativement faible capacité : dans le cas, qui peut être considéré comme très complexe, d'un système multiprocesseur à seize unités de traitement, les mémoires 5 et 6 sont identiques et sont du type très courant à $256 \times 4$ éléments binaires.

Dans le cadre de l'invention, il est également possible de modifier à tout moment l'ordre des priorités, par exemple en remplaçant l'une ou plusieurs des mémoires mortes des circuits individuels d'arbitration par d'autres mémoires programmées différemment. Ces autres mémoires peuvent être commutées par tout dispositif approprié commandé manuellement ou par le système multiprocesseur lui-même. Il est également possible d'utiliser des mémoires vives au lieu de mémoires mortes, le contenu de ces mémoires vives étant modifié par des moyens appropriés connus.

D'autre part, les groupes, ou niveaux, peuvent être subdivisés en sous-groupes, ou sous-niveaux, l'arbitreur élémentaire 2 devenant l'arbitreur de sous-niveaux, et un arbitreur élémentaire supplémentaire étant disposé dans chaque circuit individuel d'arbitration, le branchement de cet arbitreur supplémentaire étant similaire à celui de l'arbitreur 2, son entrée étant reliée à la sortie d'une autre porte OU dont les entrées seraient en parallèle avec les entrées de l'arbitreur élémentaire 2, et la sortie appropriée de cet arbitreur étant reliée à une troisième entrée de la porte ET 14 prévue en conséquence.

Enfin, il est bien entendu que l'invention n'est pas limitée à l'application à un système multiprocesseur mais peut s'appliquer à tout système dans lequel il faut arbitrer entre plusieurs sous-ensembles utilisant une voie de communication commune.

## Revendications

1. Procédé d'arbitration de plusieurs sous-ensembles (UT) comportant chacun un moyen d'arbitation (CA), faisant partie d'un système comprenant une voie de communication commune, chaque sous-ensemble pouvant réclamer la priorité pour l'accès à cette voie afin d'effectuer une opération élémentaire, ces sous-ensembles étant répartis en plusieurs groupes, caractérisé par le fait que l'on réserve à chacun de ces groupes une seule ou plusieurs priorités dans une suite cyclique principale d'attribution de priorité, que l'on réserve à chacun des sous-ensembles, à l'intérieur de chaque groupe, une seule ou plusieurs priorités dans une suite cyclique secondaire, que le moyen d'arbitration de chaque sous-ensemble reçoit d'une part un signal unique provenant de chaque groupe et indiquant si l'un au moins des sous-ensembles du groupe en question réclame la priorité, et d'autre part un autre signal provenant de chacun des sous-ensembles de son propre groupe et indiquant si le sous-ensemble en question réclame la priorité, et le moyen d'arbitrage de chaque unité ayant réclamé la priorité détermine après chaque opération élémentaire effectuée par un sous-ensemble si la priorité revient à son propre groupe selon la suite principale et si la priorité revient à sa propre unité dans son propre groupe selon la suite secondaire, et lorsque ce deux conditions sont réunies, le moyen d'arbitrage de l'unité en question lui accorde la priorité.

2. Procédé selon la revendication 1, caractérisé par le fait que l'on réserve, pour la suite cyclique principale, une seule priorité à chacun des groupes et ce selon un ordre déterminé, fixé à l'avance, et que l'on réserve, pour les suites cycliques secondaires, dans chaque groupe, une seule priorité à chacun des sous-ensembles, et ce selon un autre ordre déterminé, fixé à l'avance.

3. Procédé selon l'une quelconque des revendications précédentes, caractérisé par le fait que l'on répartit, dans chaque groupe ou dans certains d'entre eux, les sous-ensembles en plusieurs sous-groupes, que l'on réserve, à chacun des groupes une seule ou plusieurs priorités dans une suite cyclique principale d'attribution de priorité, que l'on réserve à chacun des sous-groupes une seule ou plusieurs priorités dans une suite cyclique secondaire, et que l'on réserve à chacun des sous-ensembles à l'intérieur de chaque sous-groupe une seule ou plusieurs priorités dans une suite cyclique tertiaire.

4. Dispositif d'arbitrage pour la mise en œuvre du procédé selon la revendication 1, dans un système comportant plusieurs groupes de plusieurs sous-ensembles, chaque sous-ensemble pouvant réclamer la priorité pour l'accès à une voie de communication commune, le dispositif d'arbitrage comprenant dans chaque sous-ensemble un moyen d'arbitrage, et étant caractérisé par le fait que chaque moyen d'arbitration comporte une sortie ($S_B$) de demande de priorité individuelle, une sortie de demande de priorité de groupe ($S_N$), plusieurs entrées ($E_{N1}$-$E_{N4}$) de signalisation de demandes de groupes, et plusieurs entrées ($E_{B1}$-$E_{B4}$) de signalisation de demandes individuelles, par le fait que dans chaque groupe les sorties de demande de priorité de groupe sont reliées à une liaison commune ($LN_1$-$LN_4$), par le fait que pour chaque moyen d'arbitrage chaque entrée de signalisation de demandes de groupes est reliée à la liaison commune correspondante, et chaque entrée de signalisation de demandes individuelles est reliée à la sortie individuelle de demande de priorité d'un sous-ensemble correspondant de son propre groupe, par le fait que chaque moyen d'arbitration comporte un premier arbitreur élémentaire (1) dont les entrées sont reliées aux entrées correspondantes ($E_{B1}$ à $E_{B4}$) de signalisation de demandes individuelles dudit moyen d'arbitration et dont la sortie ($S_{A13}$), correspondant au rang (troisième) dudit moyen d'arbitration est reliée à une première entrée d'un circuit ET à deux entrées (14) ; ledit premier arbitreur élémentaire (1) comportant une mémoire mémorisant une suite cyclique principale d'attribution de priorité de groupe, et un second arbitreur élémentaire (2) dont les entrées sont reliées aux entrées correspondantes ($E_{N1}$ à $E_{N4}$) de signalisation de demandes de priorité de groupe dudit moyen d'arbitration et dont la sortie ($S_{AN2}$), correspondant au rang (deuxième) du groupe dans lequel est situé ledit moyen d'arbitration, est reliée à la deuxième entrée dudit circuit ET (14), ledit second arbitreur élémentaire (2) comportant une mémoire (5) mémorisant une suite cyclique secondaire d'attribution de priorité individuelle du groupe considéré, par le fait que la sortie de ce circuit ET est reliée par l'intermédiaire d'une bascule bistable de type D (17) à l'entrée (17a) d'autorisation d'utilisation de voie de communication commune du sous-ensemble considéré ; et par le fait que chaque moyen d'arbitrage comporte un circuit OU (12) dont le nombre d'entrées (quatre) correspond au nombre d'unités d'arbitrage du groupe considéré, chacune des entrées de ce circuit OU étant reliée à une entrée ($E_{B1}$ à $E_{B4}$) de signalisation de demandes individuelles de priorité dudit moyen d'arbitration et la sortie de ce circuit OU étant reliée à la sortie ($S_N$) de demande de priorité de groupe dudit moyen d'arbitration.

5. Dispositif selon la revendication 4, caractérisé par le fait que pour banaliser les cartes à circuit imprimé comportant chacune un sous-ensemble avec son moyen d'arbitrage, ainsi qu'une première partie de connecteur solidaire de ces cartes et coopérant par enfichage avec une seconde partie de connecteur solidaire du châssis recevant toutes les cartes du système, on relie à la première partie du connecteur de chaque carte, et de la même façon pour toutes les cartes : la sortie de demande de priorité individuelle (22) ; la sortie dudit circuit OU (13) ; toutes les sorties du premier arbitreur élémentaire (10) ; toutes les sorties du second arbitreur élémentaire (11) ; et les deux entrées dudit circuit ET (15) ; et on relie par câblage, dans la deuxième partie des connecteurs : la sortie de demande de priorité individuelle à l'entrée de signalisation de demande individuelle correspondante (29-30-23) ; la sortie de demande de priorité de groupe à l'entrée correspondante de signalisation de demande de priorité de groupe (27-$LN_2$-24) ; la première entrée du circuit ET à la sortie correspondante du premier arbitreur élémentaire (25-31-28) et la seconde entrée du circuit ET à la sortie correspondante du second arbitreur élémentaire (26-32-28).

6. Dispositif selon l'une des revendications 4 et 5, caractérisé par le fait qu'il comprend un circuit d'accélération comportant : un second circuit ET (21a) dont le nombre d'entrées est égal à la somme du nombre de sous-ensembles dans le groupe considéré et du nombre de groupes moins un, une première entrée de ce circuit ET étant directement reliée à la sortie (21) de demande de priorité individuelle du sous-ensemble considéré, les autres entrées de ce second circuit ET étant à chaque fois reliées par l'intermédiaire d'un inverseur logique d'une part aux sorties de demande de priorité individuelle de tous les autres sous-ensembles du même groupe que celui de l'unité considérée, et d'autre part aux liaisons communes de demande de priorité de groupe de tous les groupes autres que celui considéré ; ce circuit d'accélération comportant également un second circuit OU (16) à deux entrées dont une entrée est reliée à la sortie dudit premier circuit ET à deux entrées, et dont l'autre entrée est reliée à la sortie dudit second circuit ET, la sortie de ce second circuit OU étant reliée par l'intermédiaire d'une bascule bistable de type D (17) à l'entrée (17a) d'autorisation d'utilisation de voie de communication commune du sous-ensemble considéré.

7. Dispositif selon la revendication 6, caractérisé par le fait que pour banaliser les cartes à circuit imprimé comportant chacune un sous-ensemble avec son moyen d'arbitration, ainsi qu'une première partie de connecteur solidaire de ces cartes et coopérant par enfichage avec une seconde partie de connecteur solidaire du châssis recevant toutes les cartes du système, on relie à la première partie du connecteur de chaque carte, et de la même façon pour toutes les cartes : la sortie de demande de priorité individuelle ; la sortie dudit premier circuit OU ; toutes les sorties du premier arbitreur élémentaire ; toutes les sorties du second arbitreur élémentaire ; les deux entrées dudit premier circuit ET et chaque fois par l'intermédiaire d'un inverseur logique toutes les entrées, sauf la première, dudit second circuit ET ; et on relie par câblage, dans la deuxième partie des connecteurs : la sortie de demande de priorité individuelle à l'entrée de signalisation de demande individuelle correspondante (29-30-23) ; la sortie de demande de priorité de groupe à l'entrée correspondante de signalisation de demande de priorité de groupe (27-LN$_2$-24) ; la première entrée du premier circuit ET à la sortie correspondante du premier arbitreur élémentaire (25-31-28) ; et la seconde entrée du premier circuit ET à la sortie correspondante du second arbitreur élémentaire (26-32-28) ; et on relie par câblage les bornes de la deuxième partie de connecteur, correspondant aux bornes de la premier partie du connecteur reliées à un inverseur logique, d'une part à toutes les entrées de signalisation de demande individuelle dudit moyen d'arbitration, sauf à celle correspondant au sous-ensemble considéré, et d'autre part à toutes les entrées signalisation de demande de priorité de groupe dudit moyen d'arbitration sauf à celle correspondant au sous-ensemble considéré (23-23a-24).

**Claims**

1. A method for arbitrating between a plurality of subassemblies (UT) each comprising an arbitration means (CA) and belonging to a system comprising a common communication bus, each subassembly being susceptible to claim priority of access to said bus for performing an elementary operation, these subassemblies being arranged in a plurality of groups, characterized in that one priority or several priorities are reserved in a main cyclic sequence of priority attribution to each one of these groups, that one priority or several priorities are reserved in a secondary cyclic sequence to each subassembly within each group, that the arbitration means of each subassembly receives on the one hand a unique signal from each group indicating if at least one of the subassemblies of the respective group claims priority, and on the other hand another signal from each one of the subassemblies of its own group indicating if the respective subassembly claims priority, and that the arbitration means of each unit having claimed priority determines when a subassembly has performed an elementary operation if priority is allocated to its own group according to the main sequence and if priority is allocated to its own unit in its own group according to the secondary sequence, and that the arbitration means of the respective unit allocates priority to this unit when both conditions are fulfilled.

2. A method according to claim 1, characterized in that one unique priority is reserved to each one of the groups for the main cyclic sequence according to a predetermined order which is established in advance, and that one unique priority is reserved to each one of the subassemblies for the secondary cyclic sequences in each group according to another predetermined order establisched in advance.

3. A method according to any one of the preceding claims, characterized in that in each group of in certains groups, the subassemblies are arranged in several subgroups, that one unique or several priorities in a main cyclic sequence of priority attribution are reserved to each one of the groups, that one unique or several priorities in a secondary cyclic sequence are reserved to each one of the subgroups and that one unique or several priorities are reserved to each one of the subassemblies within each subgroup in a cyclic sequence of the third order.

4. An arbitration device for realizing the method according to claim 1 in a system comprising a plurality of groups of a plurality of subassemblies, each subassembly being susceptible to claim priority of access to a common communication bus, the arbitration device comprising in each subassembly an arbitration means, characterized in that each arbitration means comprises an output (S$_B$) of individual priority request, an output of group priority request (S$_N$), several inputs (E$_{N1}$-E$_{N4}$) for signalling group requests and several inputs (E$_{B1}$-E$_{B4}$) for signalling individual requests, that the outputs of the group priority request, are connected in each group to a common link (LN$_1$-LN$_4$), that each input for signalling group requests is connected for each arbitration means to the corresponding common link and that each input for signalling individual requests is connected to the individual output of priority request of a corresponding subassembly belonging to its own group, that each arbitration means comprises a first elementary arbiter (1), the inputs of which are connected to the corresponding inputs ($E_B$ to $E_{B4}$) for signalling individual requests of said arbitration means and the output ($S_{A13}$) of which corresponding to the rank (Nr. 3) of said arbitration means is connected to a first input of an AND circuit (14) having two inputs, said first elementary arbiter comprising a memory for storing a main cyclic sequence of attribution of group priorities and a second elementary arbiter (2) the inputs of which are connected to corresponding inputs ($E_{N1}$ to $E_{N4}$) for signalling group priority requests of said arbitration means and the output ($S_{AN2}$) of which corresponding to the rank (Nr. 2) of the group in which said arbitration means is situated is connected to the second input of said AND circuit (14), said second elementary arbiter (2) comprising a memory (5) for storing a secondary cyclic sequence of attribution of individual priority belonging to the respective group, that the output of this AND circuit is connected via a bistable flip-flop of the D type (17) to the input (17a) for the authorization of the utilization of the common communication bus of the considered subassembly, and that each arbitration means comprises an OR circuit (12), the number of inputs of which (four) corresponds to the number of arbitration units of the considered group, each one of the inputs of this OR circuit being connected to one input ($E_{B1}$ to $E_{B4}$) for signalling individual priority requests of said arbitration means, whereas the output of this OR circuit is connected to the output ($S_N$) of the group priority request of said arbitration means.

5. A device according to claim 4, characterized in that in order to render common the printed circuit cards, each one comprising a subassembly and its arbitration means as well as a first connector part which is fixed to these cards and co-operates by a plug-in connection with a second connector part which is fixed to the chassis receiving all the cards of the system, the first connector part of each card, and in the same way for all the other cards, is connected to the output of individual priority request (22), to the output of said OR circuit (13), to all the outputs of the first elementary arbiter (10), to all the outputs of the second elementary arbiter (11) and to both inputs of said AND circuit (15), and a wire connection is established in the second connector part between the outputs of individual priority request and the corresponding input for signalling individual request (29-30-23), between the outputs of group priority request and the corresponding input for signalling a group priority request (27-$LN_2$-24), between the first input of the AND circuit and the corresponding output of the first elementary arbiter (25-31-28) and between the second input of the AND circuit and the corresponding output of the second elementary arbiter (26-32-28).

6. A device according to one of the claims 4 and 5, characterized in that it comprises and acceleration circuit containing : a second AND circuit (21a), the number of inputs of which is equal to the sum of the number of subassemblies in the considered group and the number of groups minus one, a first input of said AND circuit being directly connected to the output (21) of the individual priority request of the considered subassembly, the other inputs of this second AND circuit being in each case connected via a logic inverter on the one hand to the outputs of the individual priority request of all the other subassemblies belonging to the same group as the subassembly of the considered unit, and on the other hand to common links of group priority request of all the other groups except the considered group, this acceleration circuit further comprising a second OR circuit (16) having two inputs one input of which is connected to the output of said first AND circuit having two inputs and the other input of which is connected to the output of said second AND circuit, the output of said second OR circuit being connected via a bistable flip-flop of the D-type (17) to the input (17a) for authorizing the use of the common communication bus of the considered subassembly.

7. A device according to claim 6, characterized in that in order to render common the printed circuit card comprising each a subassembly with its arbitrations means as well as a first connector part which is fixed to these cards and cooperates by a plug-in connection with a second connector part fixed to the chassis which receives all the cards of the system, the first connector part of each card, and in the same way for all the other cards, is connected to the output of individual priority request, to the output of said first OR circuit, to all outputs of the first elementary arbiter, to all the outputs of the second elementary arbiter, to the two inputs of said first AND circuit and via a respective logic inverter to all the inputs except the first one of said second AND circuit, and a wire connection is established in the second connector part between the output of the individual priority request and the corresponding input for signalling individual request (29-30-23), between the output of group priority request and the corresponding input for signalling group priority request (27-$LN_2$-24), between the first input of the first AND circuit and the corresponding output of the first elementary arbiter (25-31-28) and between the second input of the first AND circuit and the corresponding output of the second elementary arbiter (26-32-28), and a wire connection is established between the terminals of the second connector part corresponding to the terminals of the first connector part connected to a logic inverter and on the one hand all the inputs for signalling individual request of said arbitration means except the one corresponding to the considered subassembly, as well as on the other hand to all the inputs for signalling group priority request of said arbitration means except that one corresponding to the considered subassembly (23-23a-24).

**Patentansprüche**

1. Verfahren zur Prioritätssteuerung mehrerer Untereinheiten (UT), die je ein Prioritätssteuerungsmittel (CA) aufweisen und zu einem System mit einem gemeinsamen Kommunikationsweg gehören, wobei jede Untereinheit die Priorität für den Zugriff zu diesem Weg verlangen kann, um eine Elementaroperation durchzuführen, und die Untereinheiten in Gruppen zusammengefaßt sind, dadurch gekennzeichnet, daß man jeder der Gruppen eine einzige oder mehrere Prioritäten in einer zyklischen Hauptfolge der Prioritätszuteilung reserviert, daß man jeder der Untereinheiten innerhalb jeder Gruppe eine oder mehrere Prioritäten in einer zyklischen Unterfolge reserviert, daß das Prioritätssteuermittel jeder Untereinheit einerseits ein einziges Signal von jeder Gruppe zugeführt erhält, das angibt, ob mindestens eine der Untereinheiten der betreffenden Gruppe die Priorität verlangt, und andererseits ein anderes Signal von jeder der Untereinheiten ihrer eigenen Gruppe zugeführt erhält, das angibt, ob die betreffende Untereinheit die Priorität verlangt, und daß das Prioritätssteuermittel jeder Einheit, die die Priorität verlangt hat, nach jeder von einer Untereinheit durchgeführten Elementaroperation bestimmt, ob die Priorität ihrer eigenen Gruppe gemäß der Hauptfolge und ob die Priorität ihrer eigenen Einheit in ihrer eigenen Gruppe gemäß der Unterfolge zukommt, so daß, wenn diese beiden Bedingungen erfüllt sind, das Prioritätssteuermittel der betreffenden Einheit ihr die Priorität zuspricht.

2. Verfahren nach Anspruch 1, dadurch gekennzeichnet, daß man für die zyklische Hauptfolge jeder der Gruppen und gemäß einer bestimmten und vorher festgelegten Reihenfolge eine einzige Priorität reserviert und daß man für die zyklischen Unterfolgen in jeder Gruppe jeder der Untereinheiten gemäß einer anderen vorab festgelegten bestimmten Reihenfolge eine einzige Priorität reserviert.

3. Verfahren nach einem beliebigen der vorhergehenden Ansprüche, dadurch gekennzeichnet, daß in jeder Gruppe oder in gewissen dieser Gruppen die Untereinheiten in mehrere Untergruppen aufteilt, daß man jeder der Gruppen eine oder mehrere Prioritäten in einer zyklischen Hauptfolge für die Zuteilung der Prioritäten reserviert, daß man jeder der Untergruppen eine oder mehrere Prioritäten in einer zyklischen Unterfolge reserviert und daß man jeder der Untereinheiten innerhalb jeder Untergruppe eine einzige oder mehrere Prioritäten in einer zyklischen Tertiärfolge reserviert.

4. Vorrichtung zur Prioritätssteuerung zur Durchführung des Verfahrens nach Anspruch 1 in einem System, das mehrere Gruppen von je mehreren Untereinheiten umfaßt, wobei jede Untereinheit die Priorität für den Zugriff auf einen gemeinsamen Kommunikationsweg verlangen kann und die Vorrichtung zur Prioritätssteuerung in jeder Untereinheit ein Prioritätssteuermittel enthält, dadurch gekennzeichnet, daß jedes Prioritätssteuermittel einen Ausgang ($S_B$) für die individuelle Prioritätsanforderung, einen Ausgang ($S_N$) für die Gruppenprioritätsanforderung, mehrere Eingänge ($E_{N1}$-$E_{N4}$) für die Signalisierung von Gruppenanforderungen und mehrere Eingänge ($E_{B1}$-$E_{B4}$) für die Signalisierung von Individualanforderungen aufweist, daß in jeder Gruppe die Gruppenprioritätsanforderungsausgänge an eine gemeinsame Verbindung ($LN_1$-$LN_4$) angeschlossen sind, daß für jedes Prioritätssteuermittel jeder Eingang für die Signalisierung von Gruppenanforderungen an die entsprechende gemeinsame Verbindung und jeder Eingang für die Signalisierung von Individualanforderungen an den Individualausgang für Prioritätsanforderungen einer entsprechenden Untereinheit ihrer eigenen Gruppe angeschlossen ist, daß jedes Prioritätssteuermittel einen ersten Elementarsteuerkreis (1) enthält, dessen Eingänge an die entsprechenden Eingänge ($E_{B1}$-$E_{B4}$) für die Signalisierung von Individualanforderungen dieses Prioritätssteuermittels und dessen Ausgang ($S_{A13}$) entsprechend dem Rang (Nr. 3) des Prioritätssteuermittels an einen ersten Eingang eines UND-Kreises mit zwei Eingängen (14) angeschlossen ist, wobei der erste Elementarsteuerkreis (1) einen Speicher enthält, in dem eine zyklische Hauptfolge für die Zuteilung der Gruppenpriorität gespeichert ist, und einen zweiten Elementarsteuerkreis (2) aufweist, dessen Eingänge an die entsprechenden Eingänge ($E_{N1}$-$E_{N4}$) für die Signalisierung von Gruppenprioritätsanforderungen dieses Prioritätssteuermittels und dessen Ausgang ($S_{AN2}$) entsprechend dem Rang (Nr. 2) der Gruppe, in der dieses Prioritätssteuermittel liegt, an den zweiten Eingang des genannten UND-Kreises (14) angeschlossen ist, wobei der zweite Elementarsteuerkreis (2) einen Speicher (5) aufweist, der eine zyklische Unterfolge für die Zuteilung der Individualpriorität der betrachteten Gruppe aufweist, daß der Ausgang dieses UND-Kreises über eine bistabile Kippstufe von Typ D (17) an den Zuteilungseingang (17a) für den gemeinsamen Kommunikationsweg der betrachteten Untereinheit angeschlossen ist und daß jedes Prioritätssteuermittel einen ODER-Schaltkreis (12) aufweist, dessen Anzahl (vier) von Eingängen der Anzahl von Prioritätssteuereinheiten der betrachteten Gruppe entspricht, wobei jeder der Eingänge dieses ODER-Kreises an einen Eingang ($E_{B1}$ bis $E_{B4}$) für die Signalisierung von Individualprioritätsanforderungen dieses Prioritätssteuermittels und der Ausgang dieses ODER-Kreises an den Ausgang ($S_N$) für die Gruppenprioritätsanforderung dieses Prioritätssteuermittels angeschlossen ist.

5. Vorrichtung nach Anspruch 4, dadurch gekennzeichnet, daß für die allgemeine Verwendbarkeit der Druckschaltungskarten, die je eine Untereinheit mit ihren Prioritätssteuermitteln sowie einen ersten Steckerteil enthalten, der mit diesen Karten fest verbunden ist und durch Steckverbindung mit einem zweiten Steckerteil zusammenwirkt, der fest mit dem alle Karten des Systems aufnehmenden Chassis verbunden ist, mit dem ersten Steckerteil jeder Karte, und dies in gleicher Weise für alle Karten, der Ausgang für die individuelle Prioritätsanforderung (22), der Ausgang des genannten ODER-Schaltkreises (13), alle Ausgänge des ersten Elementarsteuerkreises (10), alle Ausgänge des zweiten Elementarsteuerkreises (11) und die beiden Eingänge des genannten UND-Schaltkreises (15) verbunden werden und durch Verkabelung im zweiten Teil des Steckers der Ausgang für die individuelle Prioritätsanforderung mit dem entsprechenden Eingang für die Signalisierung der Individualanforderung (29-30-23), der Ausgang für die Gruppenprioritätsanforderung mit dem entsprechenden Eingang für die Signalisierung der Gruppenprioritätsanforderung (27-LN$_2$-24), der ersten Eingang des UND-Kreises mit dem entsprechenden Ausgang des ersten Elementarsteuermittels (25-31-28) und der zweite Eingang des UND-Kreises mit dem entsprechenden Ausgang des zweiten Elementarsteuermittels (26-32-28) verbunden werden.

6. Vorrichtung nach einem der Ansprüche 4 und 5, dadurch gekennzeichnet, daß sie einen Beschleunigungsschaltkreis enthält, der einen zweiten UND-Schaltkreis (21a) aufweist, dessen Anzahl von Eingängen gleich der Summe aus der Anzahl von Untereinheiten in der betrachteten Gruppe und der Anzahl von Gruppen minus eins ist, wobei ein erster Eingang dieses UND-Kreises direkt an den Ausgang (21) für die individuelle Prioritätsanforderung der betrachteten Untereinheit angeschlossen ist, während die anderen Eingänge dieses zweiten UND-Kreises jedesmal über einen logischen Inverter einerseits mit den Ausgängen für die individuelle Prioritätsanforderung aller anderen Untereinheiten derselben Gruppe wie die betrachtete Einheit und andererseits mit den gemeinsamen Verbindungen für die Gruppenprioritätsanforderungen aller anderen Gruppen als der betrachteten Gruppen verbunden sind, wobei dieser Beschleunigungsschaltkreis außerdem einen zweiten ODER-Kreis (16) mit zwei Eingängen aufweist, von denen einer an den Ausgang des ersten UND-Kreises mit zwei Eingängen und der andere Eingang mit dem Ausgang des genannten zweiten UND-Kreises verbunden ist, während der Ausgang dieses zweiten ODER-Kreises über eine bistabile Kippstufe von D-Typ (17) an den Eingang (17a) für die Zuteilung des gemeinsamen Kommunikationswegs an die betrachtete Untereinheit verbunden ist.

7. Vorrichtung nach Anspruch 6, dadurch gekennzeichnet, daß für die allgemeine Verwendbarkeit der Druckschaltungskarten, die je eine Untereinheit und die zugehörigen Prioritätssteuermittel sowie einen ersten Steckerteil aufweisen, der mit diesen Karten fest verbunden ist und durch Steckverbindung mit einem zweiten Steckerteil zusammenwirkt, der mit dem alle Karten des Systems enthaltenden Chassis fest verbunden ist, an den ersten Steckerteil jeder Karte, gültig für alle Karten, der Ausgang für die individuelle Prioritätsanforderung, der Ausgang des genannten ersten ODER-Kreises, alle Ausgänge des ersten Elementarsteuermittels, alle Ausgänge des zweiten Elementarsteuermittels, die beiden Eingänge des ersten UND-Kreises und, jeweils über einen logischen Inverter, alle Eingänge mit Ausnahme des ersten Eingangs des genannten zweiten UND-Kreises angeschlossen sind und daß durch Verkabelung im zweiten Teil des Steckers der Ausgang für die individuelle Prioritätsanforderung an den entsprechenden Eingang (29-30-23) für die Signalisierung der individuellen Anforderung, der Ausgang für die Gruppenprioritätsanforderung an den entsprechenden Eingang für die Signalisierung der Gruppenprioritätsanforderung (27-LN$_2$-24), der erste Eingang des ersten UND-Kreises an den entsprechenden Ausgang des ersten Elementarsteuermittels (25-31-28) und der zweite Eingang des ersten UND-Kreises an den entsprechenden Ausgang des zweiten Elementarsteuermittels (26-32-28) angeschlossen wird und daß durch Verkabelung die Klemmen des zweiten Steckerteils, entsprechend den Klemmen des ersten Steckerteils, die an einen logischen Inverter angeschlossen sind, einerseits mit allen Eingängen für die Signalisierung der individuellen Anforderung des Prioritätssteuermittels mit Ausnahme des Eingangs, der der betrachteten Untereinheit entspricht, und andererseits mit allen Eingängen für die Signalisierung von Gruppenprioritätsanforderungen des Prioritätssteuermittels verbunden sind mit Ausnahme von dem Eingang, der der betrachteten Untereinheit (23-23a-24) entspricht.

Fig.1

Fig.2